# EUROPÄISCHE PATENTSCHRIFT

(11) **EP 2 995 756 B1**
(45) Veröffentlichungstag und Bekanntmachung des Hinweises auf die Patenterteilung: **16.03.2022**
(21) Anmeldenummer: 14184478.7
(22) Anmeldetag: 11.09.2014
(51) Int. Cl.: E05D 5/02, E05D 5/04, F16B 21/02

(54) **SCHARNIEREINHEIT UND VERFAHREN ZUR MONTAGE EINER TÜR EINES NUTZFAHRZEUGS**
HINGE UNIT AND METHOD OF MOUNTING A DOOR FOR A UTILITY VEHICLE
ENSEMBLE CHARNIÈRE ET PROCÉDÉ DE MONTAGE D'UNE PORTE POUR VÉHICULE UTILITAIRE

(43) Veröffentlichungstag der Anmeldung: 16.03.2016
(73) Patentinhaber: Schmitz Cargobull AG, 48341 Altenberge (DE)
(72) Erfinder: Kreft, Thomas, 48565 Steinfurt (DE)
(74) Vertreter: Cohausz & Florack

(56) Entgegenhaltungen:
- EP-A1- 2 116 678
- DE-B3-102011 052 313
- US-A1- 2009 283 640

## Beschreibung

Die Erfindung betrifft einen Aufbau eines Nutzfahrzeugs mit einem Rahmenelement, wenigstens einer Tür und wenigstens einer die Tür am Rahmenelement haltenden Scharniereinheit, wobei die Scharniereinheit ein mit dem Rahmenelement verbundenes Scharnierlager aufweist. Zudem betrifft die Erfindung ein Verfahren zum Montieren einer Tür an einer Scharniereinheit eines Rahmenelements eines Aufbaus eines Nutzfahrzeugs, insbesondere der zuvor genannten Art.

Nutzfahrzeuge im Sinne der Erfindung sind insbesondere solche für den Transport von Gütern im öffentlichen Straßenverkehr. Entsprechende Nutzfahrzeuge können beispielsweise selbst motorisch angetrieben sein, wie dies beispielsweise für Lastkraftwagen der Fall ist. Alternativ können Nutzfahrzeuge jedoch auch von Zugmaschinen gezogen werden, wobei insbesondere Anhänger oder Sattelauflieger in Frage kommen.

Derartige Nutzfahrzeuge sind typischerweise mit Aufbauten versehen. Zu diesen Aufbauten zählen sogenannte Planenaufbauten, bei denen wenigstens eine Seitenwand des Aufbaus, insbesondere beide Seitenwände und das Dach, durch eine Plane verschlossen ist. Kofferaufbauten weisen dagegen feste Seitenwände und ein festes Dach auf. Die Seitenwände und das Dach sind dabei vorzugsweise in Form von mehrschichtigen Paneelen gebildet, die zwei äußere, gegebenenfalls ebenfalls mehrschichtige, strukturgebende Decklagen und eine dazwischen vorgesehene Kernlage aufweisen. Die Decklagen umfassen dabei insbesondere wenigstens eine Lage aus Metall oder faserverstärktem Kunststoff, während die Kernlage in der Regel durch einen geschäumten Kunststoff, insbesondere Polyurethan, gebildet wird.

Sowohl Planenaufbauten als auch Kofferaufbauten weisen an der Rückseite typischerweise zwei zu gegenüberliegenden Seiten verschwenkbare Flügeltüren auf, die über Scharniere an einem Rückwandrahmen gehalten sind. Es sind aber auch Kofferaufbauten bekannt, bei denen eine Seitenwand eine Tür aufweist, um einen Zugang zum vorderen Bereich des vom Aufbau umschlossenen Laderaums zu gewähren. Auch solche Türen sind an einem entsprechenden Rahmenelement über Scharniere schwenkbar aufgehängt.

Die Scharniere oder Scharniereinheiten zum Halten und Verschwenken der Türen von Aufbauten von Nutzfahrzeugen umfassen ein am Rahmenelement festgelegtes Scharnierlager und ein an der Tür befestigtes Scharnierblatt. Dabei wird das Scharnierblatt über ein Bolzenelement mit dem Scharnierlager verbunden. Die Tür kann dann um das Bolzenelement, insbesondere durch die durch die Längsachse des Bolzenelements verlaufende Schwenkachse des Scharniers verschwenkt werden.

EP 2 116 678 A1 offenbart einen Aufbau eines Nutzfahrzeugs mit einem Rahmenelement, einer Tür und einer Scharniereinheit.

Die Montage der wenigstens einen Tür am Aufbau des Nutzfahrzeugs erfolgt in der Regel derart, dass das Scharnierlager am Rahmenelement und das Scharnierblatt an der Tür festgelegt werden. Die Tür wird dann durch das Verbinden des Scharnierblatts mit dem Scharnierlager über das Bolzenelement am Rahmenelement des Aufbaus befestigt.

Die Scharnierlager sind typischerweise durch Verschweißen, Vernieten oder Verschrauben mit dem Rahmenelement verbunden. Da das Scharnierlager teilweise hohen Spannungsspitzen ausgesetzt wird, kommt es in der Praxis häufig zu einer Beschädigung einer Verzinkung des Rahmenelements und/oder des Scharnierlagers im Verbindungsbereich von Rahmenelement und Scharnierlager. Diese Beschädigung der Verzinkung hat ein vorzeitiges Rosten zur Folge, wodurch die Langlebigkeit oder Reparaturanfälligkeit der Aufbauten beeinträchtigt wird.

Der vorliegenden Erfindung liegt daher die Aufgabe zugrunde, den Aufbau und das Verfahren jeweils der eingangs genannten Art derart auszugestalten und weiterzubilden, dass die Langlebigkeit entsprechender Aufbauten gesteigert bzw. deren Reparaturanfälligkeit gesenkt werden kann.

Diese Aufgabe ist bei einem Aufbau durch die Merkmale des Anspruchs 1 gelöst.

Die Aufgabe ist ferner durch ein Verfahren zum Montieren einer Tür an einer Scharniereinheit eines Rahmenelements eines Aufbau eines Nutzfahrzeugs mit den Merkmalen des Anspruchs 9 gelöst.

Die Erfindung hat also erkannt, dass sich die Stabilität der Verbindung zwischen Scharniereinheit und Rahmenelement durch ein formschlüssig mit dem Rahmenelement verbundenes Verstärkungselement verbessern lässt. Durch den Formschluss, der vorzugsweise in einer Richtung senkrecht zum Rahmenelement und/oder zur Tür in der geschlossenen Stellung wirkt, können in dieser Richtung sehr hohe Kräfte übertragen werden. Dadurch wird die Verbindung des Scharnierlagers mit dem Rahmenelement entlastet, die beispielsweise durch Nieten, Bolzen und/oder durch Schrauben bereitgestellt werden kann. In den übrigen Richtungen reicht die Festigkeit dieser Verbindung dagegen aus, um eine Beschädigung einer Verzinkung im Bereich der Scharniereinheit zu vermeiden. Die Kräfte in Richtung der formschlüssigen Verbindung zwischen dem Verstärkungselement und dem Rahmenelement werden insbesondere bei geöffneter Tür übertragen. Dann neigt die Tür nämlich zu einer Bewegung um eine senkrecht zur Tür verlaufende Achse, wodurch die Tür in hohem Maße an dem Scharnierlager und/oder dem Verstärkungselement zieht.

Verfahrensmäßig ist vorgesehen, dass das Verstärkungselement formschlüssig in das Rahmenelement eingesetzt wird und dass das Scharnierlager sowohl mit dem Rahmenelement als auch mit dem Verstärkungselement verbunden wird. Das Scharnierlager wird also nicht ausschließlich über das Verstärkungselement am Rahmenelement festgelegt, sondern zusätzlich über eine formschlüssige Verbindung, insbesondere direkt, am Rahmenelement festgelegt. Das Scharnierlager kann zudem ebenfalls direkt formschlüssig mit dem Rahmenelement verbunden sein. Bevorzugt ist es jedoch, wenn das Scharnierlager kraftschlüssig mit dem Rahmenelement verbunden ist, um auch bei unterschiedlichen Belastungen der Scharniereinheit Relativbewegungen zwischen dem Scharnierlager und dem Rahmenelement zu vermeiden, die beispielsweise zu einer Beschädigung einer Verzinkung und damit einem vorzeitigen Rosten führen können.

Nachfolgend werden bevorzugte Ausgestaltungen sowohl des Aufbaus als auch des Verfahrens gemeinsam beschrieben, ohne jeweils im Einzelnen explizit zwischen dem Aufbau und dem Verfahren zu unterscheiden. Aus dem Kontext ist für den Fachmann jedoch jeweils ersichtlich, welche Merkmale jeweils für den Aufbau und/oder das Verfahren bevorzugt sind.

Erfindungsgemäß ist das wenigstens eine Verstärkungselement an einem Ende des Scharnierlagers angeordnet. Dies bietet sich zur Kraftableitung an das Rahmenelement insbesondere deshalb an, weil die Kräfte über das Bolzenelement zum Verbinden von Scharnierlager und Scharnierblatt bevorzugt an den Enden des Scharnierlagers eingeleitet werden. Auf diese Weise wird die Rückseite des Scharnierlagers, das bevorzugt über weitere Verbindungen mit dem Rahmenelement verbunden ist, entlastet. Da die von der Tür an das Rahmenelement abzuleitenden Kräfte insbesondere über beide Längsenden des Scharnierlagers aufgenommen werden, bietet es sich zur sicheren Ableitung der Kräfte an das Rahmenelement an, wenn an beiden Längsenden des Scharnierlagers, insbesondere oberhalb und unterhalb des Scharnierlagers, Verstärkungselemente vorgesehen sind.

Zur einfachen Verbindung des Scharnierlagers mit einerseits dem Verstärkungselement und andererseits dem Scharnierblatt bzw. Bolzenelement der Scharniereinheit weist das Scharnierlager erfindungsgemäß wenigstens einen, vorzugsweise zwei, vom Rahmenelement wegweisende Schenkel auf. Der wenigstens eine Schenkel ist erfindungsgemäß mit dem mindestens einen Verstärkungselement verbunden.

diese Weise wird einerseits der konstruktive Aufwand für die Scharniereinheit gesenkt und andererseits die Ableitung der übertragenen Kräfte verbessert.

Dabei bietet es sich zusätzlich insbesondere an, wenn das Scharnierlager U-förmig ausgebildet ist. Das Scharnierlager lässt sich dann in einfacher Weise aus einem Profilelement durch Umformen herstellen. Außerdem ist ein U-förmig ausgebildetes Scharnierlager in sich vergleichsweise stabil.

Der Einfachheit halber ist das Scharnierlager alternativ oder zusätzlich mit seiner Rückseite mit dem Rahmenelement verbunden. Auf der Rückseite des Scharnierlagers kann nämlich ohne Weiteres eine hinreichende Verbindungsfläche und/oder Anlagefläche zum Rahmenelement bereitgestellt werden. Dabei dient es einer stabilen Verbindung, wenn das Scharnierlager kraftschlüssig mit dem Rahmenelement verbunden ist. Zum Zwecke einer einfachen Herstellung kann das Scharnierlager mit seiner Rückseite über wenigstens eine Nietverbindung und/oder über wenigstens eine Schraubverbindung mit dem Rahmenelement verbunden sein. Grundsätzlich können beide Bauteile aber auch miteinander verschweißt sein. Die Verbindung der Rückseite des Scharnierlagers mit dem Rahmenelement ist dabei insbesondere dann bevorzugt, wenn das Scharnierlager U-förmig ausgebildet ist und/oder wenn der wenigstens eine abstehende Schenkel des Scharnierlagers an wenigstens einem Längsende vom Rahmenelement, insbesondere senkrecht, absteht.

Die formschlüssige Verbindung zwischen dem Verstärkungselement und dem Rahmenelement kann herstellungstechnisch wie konstruktiv in einfacher Weise gelöst werden, indem das Verstärkungselement formschlüssig in eine Öffnung des Rahmenelements eingreift. Die Öffnung kann dabei in das Rahmenelement eingeschnitten sein. Alternativ kann das Rahmenelement aber auch so geformt sein, dass das Verstärkungselement wenigstens teilweise in einem Abschnitt des Rahmenelements aufgenommen ist. Anders ausgedrückt kann das Rahmenelement eine Öffnung bilden, ohne dass eine Öffnung in das Rahmenelement selbst eingebracht, insbesondere eingeschnitten, ist.

Alternativ oder zusätzlich ist die Scharniereinheit derart aufgebaut, dass vor dem Verbinden des Scharnierlagers mit dem Rahmenelement bereits das wenigstens eine Verstärkungselement formschlüssig mit dem Rahmenelement verbunden worden ist. Durch die nachträgliche Montage des Scharnierlagers am Rahmenelement kann dann sichergestellt werden, dass sich das vorzugsweise lediglich formschlüssig mit dem Rahmenelement verbundene Verstärkungselement nicht mehr vom Rahmenelement trennen kann, etwa weil eine entsprechende Bewegung des Verstärkungselements durch das nachträglich montierte Scharnierlager behindert wird. Beispielsweise kann vorgesehen sein, dass das Verstärkungselement in einfacher Weise durch Drehen formschlüssig mit dem Rahmenelement verbunden wird und dass das nachträglich montierte Scharnierlager ein entsprechendes Zurückdrehen des Verstärkungselements zum Lösen des Verstärkungselements vom Rahmenelement durch das nachträglich montierte Scharnierlager behindert wird. Anders ausgedrückt kann im montierten Zustand des Scharnierlagers das Verstärkungselement bedarfsweise weder montiert noch demontiert werden.

Um eine hohe Kraftaufnahme des Verstärkungselements zu ermöglichen, dieses aber in einfacher Weise formschlüssig mit dem Rahmenelement verbinden zu können, bietet es sich an, wenn das Verstärkungselement zwei auf gegenüberliegenden Seiten des Verstärkungselements angeordnete Hinterschnitte aufweist. Das Rahmenelement kann dann vorzugsweise formschlüssig in die Hinterschnitte eingreifen und in diesem Zustand das Verstärkungselement sicher formschlüssig am Rahmenelement halten.

Die Konstruktion der Scharniereinheit wird ebenso wie das Bereitstellen der Scharniereinheit vereinfacht, wenn das wenigstens eine Verstärkungselement über ein Bolzenelement mit dem Scharnierlager verbunden ist. Das Bolzenelement kann dabei vorzugsweise zusätzlich das Scharnierlager mit dem Scharnierblatt verbinden. Das Bolzenelement kann also ohnehin vorgesehen sein und eine doppelte Verbindungsfunktion übernehmen, nämlich zwischen Scharnierblatt und Scharnierlager, zum Verschwenken der Tür um das Bolzenelement bzw. eine durch die Längsachse des Bolzenelements definierte Schwenkachse, sowie zwischen dem wenigstens einen Verstärkungselement und dem Scharnierlager.

Türen von Aufbauten, die an der Rückwand des Aufbaus vorgesehen sind, weisen oftmals ein hohes Gewicht auf, wodurch die Scharniereinheiten zum Aufhängen der Türen besonders belastet werden. Daher bietet es sich an, wenn die Tür als Rückwandtür und/oder das Rahmenelement als Rückwandrahmen oder als ein Teil des Rückwandrahmens, d.h. beispielsweise als Rückwandrahmenelement, ausgebildet ist. In diesem Zusammenhang treten die zuvor beschriebenen Vorteile besonders zutage.

Zur einfachen Montage der Scharniereinheit und zum Zwecke eines konstruktiv einfachen Aufbaus der Scharniereinheit kann verfahrensmäßig vorgesehen sein, dass zunächst das Verstärkungselement formschlüssig mit dem Rahmenelement verbunden, beispielsweise in eine Öffnung eingesetzt, und, bedarfsweise, durch Drehen des Verstärkungselements formschlüssig mit dem Rahmenelement und/oder der Öffnung in Eingriff gebracht wird. Unabhängig von der genauen Art und Weise des formschlüssigen Verbindens von Verstärkungselement und Rahmenelement ist es dabei weiter bevorzugt, das Scharnierlager erst anschließend sowohl mit dem Rahmenelement als auch mit dem Verstärkungselement zu verbinden. In diesem Falle stört das Scharnierlager das Verbinden des Verstärkungselements mit dem Rahmenelement nicht, kann aber beispielsweise nach der Montage am Rahmenelement ein Lösen der formschlüssigen Verbindung von Verstärkungselement und Rahmenelement durch eine Begrenzung der freien Beweglichkeit des Verstärkungselements verhindern.

Alternativ oder zusätzlich kann es eine Vereinfachung des Verfahrens darstellen, wenn das Einsetzen des Verstärkungselements die Schritte des Einsteckens des Verstärkungselements in die Öffnung des Rahmenelements und, vorzugsweise anschließend, das Drehen des Verstärkungselements in der Öffnung des Rahmenelements umfasst. Die Verbindung kann so einfach, schnell und kostengünstig hergestellt werden. Zudem bietet sich auf diese Weise die Möglichkeit, eine besonders stabile Verbindung in Auszugsrichtung des Verstärkungselements zu erreichen. Der Formschluss der Verbindung wird dabei vorzugsweise durch das Drehen des Verstärkungselements in der Öffnung des Rahmenelements bewirkt.

Gerade durch das Drehen des Verstärkungselements relativ zum Rahmenelement zum Verbinden des Verstärkungselements formschlüssig mit dem Rahmenelement und der gleichzeitigen Positionierung des Verstärkungselements angrenzend zum Scharnierlager, kann das Scharnierlager in einfacher Weise ein Zurückdrehen des Verstärkungselements und damit ein Lösen des Verstärkungselements vom Rahmenelement durch die nachträgliche Montage des Scharnierelements angrenzend zum Verstärkungselement behindern.

Eine weitere Vereinfachung sowohl in konstruktiver als auch in fertigungstechnischer Sicht kann erreicht werden, wenn das Scharnierlager gleichzeitig mit dem Verstärkungselement und mit dem Scharnierblatt der wenigstens einen Tür des Aufbaus verbunden wird. Dies kann beispielsweise durch das Einstecken und Festlegen eines Bolzenelements der Scharniereinheit erreicht werden, bei dem es sich bedarfsweise auch um eine Schraube handeln kann.

Nachfolgend wird die Erfindung in einer lediglich ein Ausführungsbeispiel darstellenden Zeichnung näher erläutert. In der Zeichnung zeigt
- Fig. 1: einen erfindungsgemäßen Aufbau eines Nutzfahrzeugs in einer perspektivischen Ansicht,
- Fig. 2: ein Detail des Aufbaus aus Fig. 1 im Bereich einer Scharniereinheit der Rückwand bei geöffneter Tür in perspektivischer Ansicht,
- Fig. 3: ein Verstärkungselement der Scharniereinheit aus Fig. 2 in einer perspektivischen Ansicht und
- Fig. 4A-D: einzelne Schritte des Verfahrens zum Verbinden der Tür des Aufbaus aus Fig. 1 über eine Scharniereinheit.

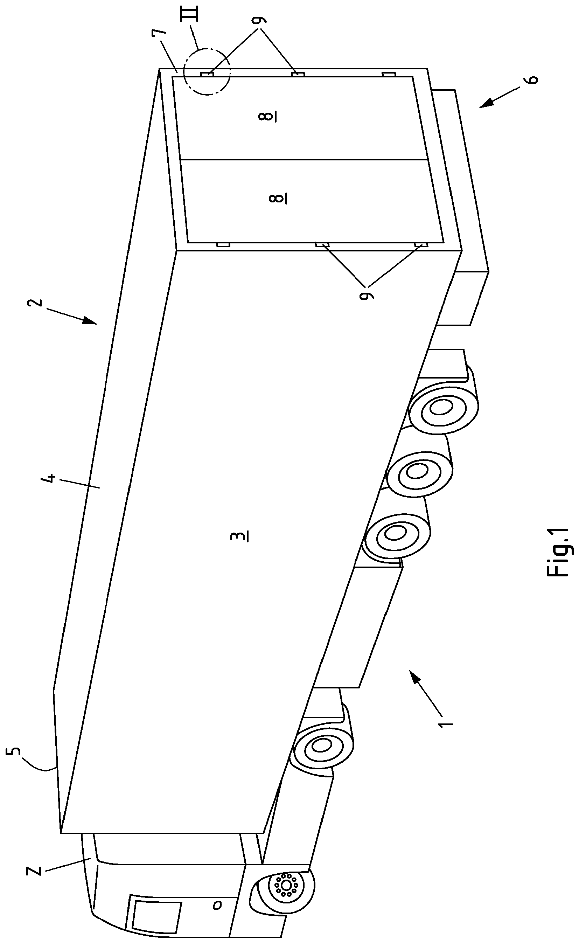

In der Fig. 1 ist ein von einer Zugmaschine Z gezogenes Nutzfahrzeug 1 in Form eines Sattelaufliegers dargestellt. Das dargestellte und insoweit bevorzugte Nutzfahrzeug 1 weist einen Aufbau 2 in Form eines Kofferaufbaus aus Seitenpaneelen 3, einem Dachpaneel 4 und einem Stirnwandpaneel 5 auf. Grundsätzlich könnte es sich bei dem Aufbau 2 jedoch auch um einen Planenaufbau handeln. Die Rückwand 6 des dargestellten und insoweit bevorzugten Aufbaus 2 umfasst ein Rahmenelement 7 in Form eines Rückwandrahmens oder eines Teils davon, d. h. also beispielsweise in Form eines Rückwandrahmenelements, und zwei daran gehaltene Türen 8, die zur Seite geöffnet werden können. Jede der beiden Türen 8 ist an einer einem Seitenwandpaneel 3 zugeordneten Seite des Rahmenelements 7 über mehrere übereinander angeordnete Scharniereinheiten 9 gehalten.

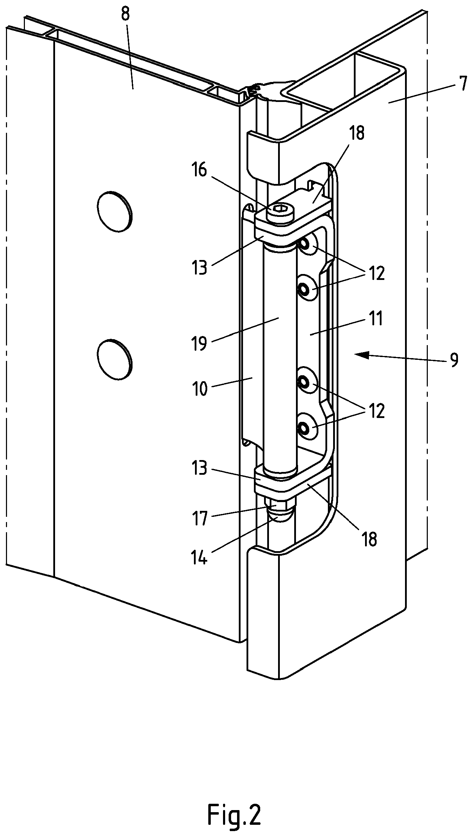

In der Fig. 2 ist die Verbindung einer Tür 8 des Aufbaus 2 am Rahmenelement 7 in Form des Rückwandrahmens über eine Scharniereinheit 9 im Detail dargestellt. Die Tür 8 befindet sich dabei im geschlossenen Zustand. Zur Verbindung der Tür 8 über die Scharniereinheit 9 am Rahmenelement 7 ist an der Tür 8 ein Scharnierblatt 10 der Scharniereinheit 9 festgelegt. Das Rahmenelement 7 trägt dagegen ein Scharnierlager 11, was beim dargestellten und insoweit bevorzugten Aufbau 2 über Niete 12 mit dem Rahmenelement 7 verbunden ist.

Das Scharnierlager 11 ist dabei U-förmig gebogen und stellt somit an den Längsenden des Scharnierlagers 11, also am oberen und am unteren Ende jeweils einen sich senkrecht vom Rahmenelement 7 weg erstreckenden Schenkel 13 auf. Die Schenkel 13 dienen der Aufnahme eines Bolzenelements 14, das durch jeweils eine Öffnung 15 in jedem Schenkel 13 hindurchgesteckt und durch einen Bolzenkopf 16 und eine Mutter 17 in dieser Position gesichert wird. Dabei entspricht die Längsachse des Bolzenelements 14 der Schwenkachse der Tür 8 beim Verschwenken der Tür 8 von der geöffneten in die geschlossene Stellung und zurück jeweils um die in der Fig. 2 dargestellte Scharniereinheit 9.

Angrenzend zu den Längsenden des Scharnierlagers 11, d. h. beim dargestellten und insoweit bevorzugten Aufbau 2 oberhalb und unterhalb des Scharnierlagers 11, ist jeweils ein Verstärkungselement 18 angrenzend zu, vorzugsweise anliegend an, jedem Schenkel 13 des Scharnierlagers 11 vorgesehen. Die beiden Verstärkungselemente 18 sind dabei über das Bolzenelement 14 mit dem Scharnierlager 11 verbunden. Das Bolzenelement 14 verläuft dabei im Bereich des Scharnierlagers 11 zwischen dessen senkrecht gegenüber dem Rahmenelement 7 nach außen vorstehenden Schenkel 13 durch ein Hohlprofil 19 des mit der Tür 8 verbundenen Scharnierblatts 10. Im Bereich des Bolzenkopfs 16 und der Mutter 17 sind die Verstärkungselemente 18 wenigstens formschlüssig mit dem Scharnierlager 11 verbunden. Um ein Spiel in der Verbindung zwischen den Verstärkungselementen 18 und dem Scharnierlager 11 zu vermeiden, bietet es sich insbesondere an, wenn die Verbindung zwischen den Verstärkungselementen 18 und dem Scharnierlager 11 über das Bolzenelement 14, etwa durch entsprechendes Anziehen der Mutter 17, kraftschlüssig ausgebildet ist.

Die dem Rahmenelement 7 zugeordneten Enden der Verstärkungselemente 18 sind mit einem Kopfabschnitt 20 in eine Öffnung 21 des Rahmenelements 7 eingebracht, wobei das Rahmenelement 7 jeweils in zwei auf gegenüberliegenden Seiten des Verstärkungselements 18 angeordnete Hinterschnitte 22 oder Aussparungen eingreift. Die Verstärkungselemente 18 sind dadurch gegenüber einem Ausziehen gegenüber dem Rahmenelement 7 in eine Richtung senkrecht zum Rahmenelement 7 und hin zum Bolzenelement 14 der Scharniereinheit 9 formschlüssig am Rahmenelement 7 gesichert.

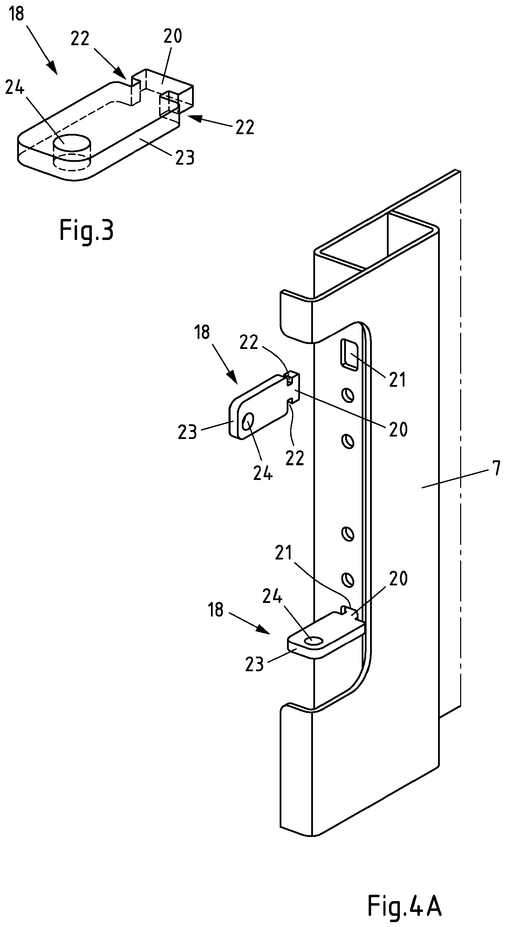

Ein Verstärkungselement 18 ist in der Fig. 3 separat dargestellt. An einer Seite des, insbesondere flachen, mit umlaufenden Schmalseiten 23 versehenen, Verstärkungselements weist 18 dieses einen Kopfabschnitt 20 auf, der zum gegenüberliegenden Ende des Verstärkungselements 18 durch zwei Hinterschnitte 22 begrenzt ist. In diese beiden Hinterschnitte 22 kann das Rahmenelement 7 eingreifen, so dass das Verstärkungselement 18 dadurch formschlüssig am Rahmenelement 7 gehalten ist und der Kopfabschnitt 20 nicht durch die Öffnung 21 im Rahmenelement 7 hindurch nach außen gelangen kann. An dem dem Kopfabschnitt 20 gegenüberliegenden Abschnitt des Verstärkungselements 18 weist das Verstärkungselement 18 eine Öffnung 24 zum Durchführen des Bolzenelements 14 der Scharniereinheit 9 auf. Das Verstärkungselement 18 ist beim dargestellten und insoweit bevorzugten Aufbau 2 ebenso wie das Scharnierlager 11, das Scharnierblatt 10 und das Bolzenelement 14 aus einem metallischen Werkstoff, insbesondere Stahl, gefertigt.

In den Fig. 4A-D sind Schritte des Montierens des Scharnierlagers 11 am Rahmenelement 7 dargestellt. Zunächst werden die Verstärkungselemente 18 in dafür vorgesehene Öffnungen 21 des Rahmenelements 7 in einer ersten Ausrichtung eingesteckt und nach dem Einstecken gedreht, um einen Formschluss zwischen den Verstärkungselementen 18 und dem Rahmenelement 7 bereitzustellen. Beim dargestellten und insoweit bevorzugten Aufbau 2 werden die Verstärkungselemente 18 dazu gegenüber ihrer Ausrichtung beim Einstecken in die Öffnung 21 des Rahmenelements 7 in der Öffnung um etwa 90° gedreht. Die Drehachse kann dabei im Wesentlichen senkrecht zum Rahmenelement und/oder in Einsteckrichtung des Verstärkungselements verlaufen. Beim dargestellten und insoweit bevorzugten Aufbau 2 verläuft eine durch das Verstärkungselement 18 definierte Ebene beim Einstecken in die Öffnung 21 des Rahmenelements 7 im Wesentlichen vertikal, während dieselbe Ebene nach dem Drehen des Verstärkungselements 18 im Wesentlichen horizontal verläuft.

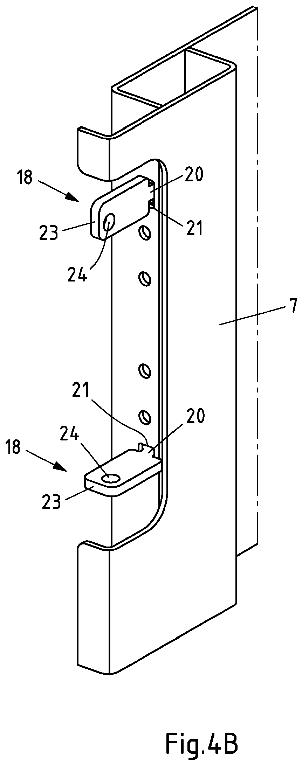

Während in der Fig. 4A das untere Verstärkungselement 18 bereits formschlüssig mit dem Rahmenelement 7 verbunden ist, ist das obere Verstärkungselement 18 im noch nicht in die zugehörige Öffnung 21 des Rahmenelements 7 eingesteckten Zustand dargestellt. In der Fig. 4B ist das obere Verstärkungselement 18 dagegen bereits in die entsprechende Öffnung 21 im Rahmenelement 7 eingesteckt, aber noch nicht zum Schließen der formschlüssigen Verbindung mit dem Rahmenelement 7 gegenüber dem Rahmenelement 7 gedreht worden. Der Stabilität halber ist das Rahmenelement 7 beim dargestellten und insoweit bevorzugten Aufbau 2 zudem aus Metall, vorzugsweise Stahl, insbesondere einem Metallprofil oder Stahlprofil gebildet.

Die Öffnungen 21 sind beim dargestellten und insoweit bevorzugten Aufbau 2 durch Ausschneiden von einem Teil eines Profilteils des Rahmenelements 7 gebildet. Grundsätzlich könnte die Öffnung auch durch zwei Vorsprünge des Rahmenelements vorgesehen sein, die formschlüssig mit dem Verstärkungselement 18 zusammenwirken. Der Bereich zwischen den Vorsprüngen würde dann als Öffnung angesehen werden. Es kommt also nicht darauf an, dass tatsächlich unter Heraustrennen von Material eine Öffnung in das Rahmenelement eingeschnitten wird. Auch müssen die Hinterschnitte nicht in Form von Aussparungen ausgebildet sein. Die Hinterschnitte könnten auch durch Vorsprünge des Verstärkungselements gebildet werden, die formschlüssig hinter Abschnitte des Rahmenelements, beispielsweise hinter den Rand der Öffnung oder der Vorsprünge des Rahmenelements greifen. Die genaue Ausgestaltung der formschlüssigen Verbindung ist also grundsätzlich weniger von Bedeutung. Entscheidender ist nämlich, dass das Verstärkungselement überhaupt formschlüssig am Rahmenelement gehalten ist.

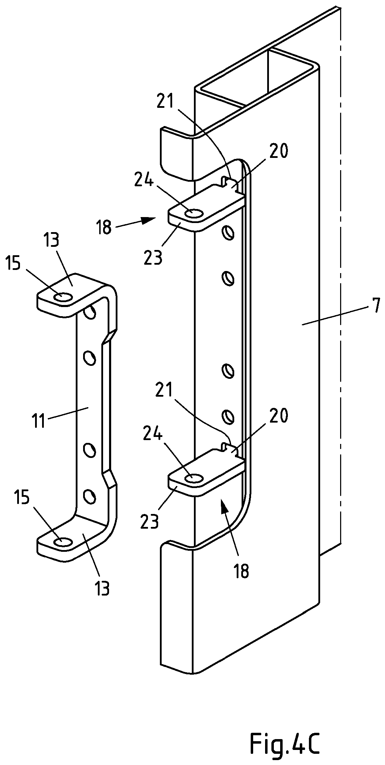

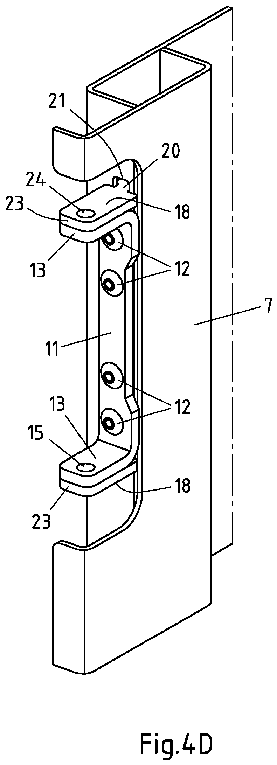

In der Fig. 4C sind die beiden Verstärkungselemente 18 bereits formschlüssig mit dem Rahmenelement 7 verbunden. In dieser Stellung der Verstärkungselemente 18 kann nun das Scharnierlager 11 zwischen den Verstärkungselementen 18 montiert werden. Dabei kommen die Verstärkungselemente 18 vorzugsweise in Anlage an die Längsenden des Scharnierlagers 11. Ein solcher Kontakt zwischen dem Scharnierlager 11 und den Verstärkungselementen 18 ist in der Fig. 4D dargestellt, wobei das Scharnierlager 11 zudem über vier Nieten 12 mit dem Rahmenelement 7 kraftschlüssig verbunden ist. Das Scharnierlager 11 ist U-förmig ausgebildet und weist an beiden Längsenden des Scharnierlagers 11 senkrecht vom Rahmenelement 7 nach außen bzw. nach hinten bezogen auf den Aufbau vorstehende Schenkel 13 auf, die in Anlage mit jeweils einem Verstärkungselement 18 sind. Dabei weisen die beiden Schenkel 13 des Scharnierlagers 11 und das jeweils zugehörige Verstärkungselement 18 vorzugsweise im Wesentlichen konzentrische Öffnungen 15,24 auf, durch die ein Bolzenelement 14 hindurchgesteckt werden kann, wie dies beispielsweise in der Fig. 2 zum Halten des Scharnierblatts 10 am Scharnierlager 11 dargestellt ist.

## Patentansprüche

1. Aufbau (2) eines Nutzfahrzeugs (1) mit wenigstens einem Rahmenelement (7), wenigstens einer Tür (8) und wenigstens einer die Tür (8) am Rahmenelement (7) haltenden Scharniereinheit (9), wobei wenigstens ein Verstärkungselement (18) vorgesehen ist und das wenigstens eine Verstärkungselement (18) mit einem Scharnierlager (11) der Scharniereinheit (9) verbunden ist,
**dadurch gekennzeichnet, dass** das Scharnierlager (11) der Scharniereinheit (9) mit dem Rahmenelement (7) verbunden ist, dass das wenigstens eine Verstärkungselement (18) formschlüssig mit dem Rahmenelement (7) verbunden ist, dass das wenigstens eine Verstärkungselement (18) an einem Ende des Scharnierlagers (11) oberhalb und/oder unterhalb des Scharnierlagers (11) angeordnet ist, dass das Scharnierlager (11) wenigstens einen vom Rahmenelement (7) wegweisenden Schenkel (13) aufweist und dass der wenigstens eine Schenkel (13) mit dem wenigstens einen Verstärkungselement (18) verbunden ist.

2. Aufbau nach Anspruch 1,
**dadurch gekennzeichnet, dass** das Scharnierlager (11) U-förmig ausgebildet ist.

3. Aufbau nach Anspruch 1 oder 2,
**dadurch gekennzeichnet, dass** das Scharnierlager (11) mit seiner Rückseite, vorzugsweise kraftschlüssig, insbesondere über wenigstens eine Nietverbindung und/oder über wenigstens eine Schraubverbindung, mit dem Rahmenelement (7) verbunden ist.

4. Aufbau nach einem der Ansprüche 1 bis 3,
**dadurch gekennzeichnet, dass** das wenigstens eine Verstärkungselement (18) formschlüssig in eine Öffnung (21) des Rahmenelements (7) eingreift.

5. Aufbau nach einem der Ansprüche 1 bis 4,
**dadurch gekennzeichnet, dass** vor dem Verbinden des Scharnierlagers (11) mit dem Rahmenelement (7) das wenigstens eine Verstärkungselement (18) formschlüssig mit dem Rahmenelement (7) verbunden worden ist.

6. Aufbau nach einem der Ansprüche 1 bis 5,
**dadurch gekennzeichnet, dass** das wenigstens eine Verstärkungselement (18) zwei auf gegenüberliegenden Seiten des Verstärkungselements (18) angeordnete Hinterschnitte (22) aufweist und dass das Rahmenelement (7) formschlüssig in die Hinterschnitte (22) eingreift.

7. Aufbau nach einem der Ansprüche 1 bis 6,
**dadurch gekennzeichnet, dass** das wenigstens eine Verstärkungselement (18) über ein Bolzenelement (14) mit dem Scharnierlager (14) verbunden ist und dass, vorzugsweise, das Bolzenelement (14) das Scharnierblatt (10) mit dem Scharnierlager (11) verbindet.

8. Aufbau nach einem der Ansprüche 1 bis 7,
**dadurch gekennzeichnet, dass** die Tür (8) eine Rückwandtür und/oder das Rahmenelement (7) ein Rückwandrahmenelement ist.

9. Verfahren zum Montieren einer Tür (8) an einer Scharniereinheit (9) eines Rahmenelements (7) eines Aufbaus (2) eines Nutzfahrzeugs (1) nach einem der Ansprüche 1 bis 8, **dadurch gekennzeichnet, dass** das wenigstens eine Verstärkungselement (18) der Scharniereinheit (9) formschlüssig in das Rahmenelement (7) eingesetzt wird und das Scharnierlager (11) der Scharniereinheit (9) mit dem Rahmenelement (7) und dem wenigstens einen Verstärkungselement (18) verbunden wird.

10. Verfahren nach Anspruch 9, bei dem zunächst das wenigstens eine Verstärkungselement (18) formschlüssig mit dem Rahmenelement (7) und anschließend das Scharnierlager (11) sowohl mit dem Rahmenelement (7) als auch mit dem wenigstens einen Verstärkungselement (18) verbunden wird.

11. Verfahren nach Anspruch 9 oder 10, bei dem das Einsetzen des wenigstens einen Verstärkungselements (18) die Schritte des Einsteckens in die Öffnung (21) des Rahmenelements (7) und das Drehen des Verstärkungselements (18) in der Öffnung (21) des Rahmenelement (7) umfasst und bei dem das Drehen des Verstärkungselements (18) einen Formschluss zwischen dem Verstärkungselement (18) und dem Rahmenelement (7) bewirkt.

12. Verfahren nach einem der Ansprüche 9 bis 11, bei dem ein Lösen des wenigstens einen Verstärkungselements (18) vom Rahmenelement (7) durch Drehen des Verstärkungselements (18) im Rahmenelement durch das Verbinden des Scharnierlagers (11) mit dem Rahmenelement (7) verhindert wird.

13. Verfahren nach einem der Ansprüche 9 bis 12, bei dem das Scharnierlager (11) gleichzeitig mit dem mindestens einen Verstärkungselement (18) und mit dem Scharnierblatt (10) der wenigstens einen Tür (8) des Aufbaus (2), insbesondere über einen Bolzenelement (14) der Scharniereinheit (9), verbunden wird.

## Claims

1. Body (2) of a commercial vehicle (1) having at least one frame element (7), at least one door (8) and at least one hinge unit (9) holding the door (8) on the frame element (7), wherein at least one reinforcement element (18) is provided and the at least one reinforcement element (18) is connected to a hinge bearing (11) of the hinge unit (9), **characterised in that** the hinge bearing (11) of the hinge unit (9) is connected to the frame element (7), **in that** the at least one reinforcement element (18) is connected to the frame element (7) in a positive-locking manner, **in that** the at least one reinforcement element (18) is arranged at one end of the hinge bearing (11) above and/or below the hinge bearing (11), **in that** the hinge bearing (11) has at least one limb (13) pointing away from the frame element (7) and **in that** the at least one limb (13) is connected to the at least one reinforcement element (18).

2. Body according to claim 1, **characterised in that** the hinge bearing (11) is formed in a U-shape.

3. Body according to claim 1 or 2, **characterised in that** the hinge bearing (11) is connected with its rear side, preferably in a non-positive locking manner, in particular via at least one rivet connection and/or via at least one screw connection, to the frame element (7).

4. Body according to any one of claims 1 to 3, **characterised in that** the at least one reinforcement element (18) engages into an opening (21) of the frame element (7) in a positive-locking manner.

5. Body according to any one of claims 1 to 4, **characterised in that** the at least one reinforcement element (18) has been connected to the frame element (7) in a positive-locking manner before connecting the hinge bearing (11) to the frame element (7).

6. Body according to any one of claims 1 to 5, **characterised in that** the at least one reinforcement element (18) has two undercuts (22) arranged on opposing sides of the reinforcement element (18) and **in that** the frame element (7) engages into the undercuts (22) in a positive-locking manner.

7. Body according to any one of claims 1 to 6, **characterised in that** the at least one reinforcement element (18) is connected to the hinge bearing (11) via a bolt element (14) and **in that**, preferably, the bolt element (14) connects the hinge leaf (10) to the hinge bearing (11).

8. Body according to any one of claims 1 to 7, **characterised in that** the door (8) is a rear wall door and/or the frame element (7) is a rear wall frame element.

9. Method for mounting a door (8) on a hinge unit (9) of a frame element (7) of a body (2) of a commercial vehicle (1) according to any one of claims 1 to 8, **characterised in that** the at least one reinforcement element (18) of the hinge unit (9) is inserted into the frame element (7) in a positive-locking manner and the hinge bearing (11) of the hinge unit (9) is connected to the frame element (7) and to the at least one reinforcement element (18).

10. Method according to claim 9, in the case of which the at least one reinforcement element (18) is first connected to the frame element (7) in a positive-locking manner and then the hinge bearing (11) is connected to the frame element (7) and to the at least one reinforcement element (18).

11. Method according to claim 9 or 10, in the case of which inserting the at least one reinforcement element (18) comprises the steps of introducing it into the opening (21) of the frame element (7) and rotating the reinforcement element (18) in the opening (21) of the frame element (7) and in the case of which rotating the reinforcement element (18) causes a positive-locking engagement between the reinforcement element (18) and the frame element (7).

12. Method according to any one of claims 9 to 11, in the case of which by rotating the reinforcement element (18) in the frame element, the at least one reinforcement element (18) is prevented from detaching from the frame element (7) by way of the connection of the hinge bearing (11) to the frame element (7).

13. Method according to any one of claims 9 to 12, in the case of which the hinge bearing (11) is simultaneously connected to the at least one reinforcement element (18) and to the hinge leaf (10) of the at least one door (8) of the body (2), in particular via a bolt element (14) of the hinge unit (9).

## Revendications

1. Structure (2) d'un véhicule utilitaire (1) avec au moins un élément de châssis (7), au moins une porte (8) et au moins une unité de charnière (9) maintenant la porte (8) sur l'élément de châssis (7), au moins un élément de renforcement (18) étant prévu et le au moins un élément de renforcement (18) étant relié à un palier de charnière (11) de l'unité de charnière (9),
**caractérisée en ce que**
le palier de charnière (11) de l'unité de charnière (9) est relié à l'élément de châssis (7), **en ce que** le au moins un élément de renforcement (18) est relié, par liaison de forme, à l'élément de châssis (7), **en ce que** le au moins un élément de renforcement (18) est agencé sur une extrémité du palier de charnière (11) au-dessus et/ou en dessous du palier de charnière (11), **en ce que** le palier de charnière (11) présente au moins une branche (13) s'écartant de l'élément de châssis (7) et **en ce que** ladite au moins une branche (13) est reliée audit au moins un élément de renforcement (18).

2. Structure selon la revendication 1,
**caractérisée en ce que**
le palier de charnière (11) est conçu en forme de U.

3. Structure selon la revendication 1 ou 2,
**caractérisée en ce que**
le palier de charnière (11) est relié, par son côté postérieur, de préférence par liaison de force, à l'élément de châssis (7), notamment par l'intermédiaire d'au moins un assemblage rivé et/ou d'au moins un raccord vissé.

4. Structure selon l'une des revendications 1 à 3,
**caractérisée en ce que**
le au moins un élément de renforcement (18) s'engage, par liaison de forme, dans une ouverture (21) de l'élément de châssis (7).

5. Structure selon l'une des revendications 1 à 4,
**caractérisée en ce que**
avant de relier le palier de charnière (11) à l'élément de châssis (7), le au moins un élément de renforcement (18) a été relié, par liaison de forme, à l'élément de châssis (7).

6. Structure selon l'une des revendications 1 à 5,
**caractérisée en ce que**
le au moins un élément de renforcement (18) présente deux contre-dépouilles (22) agencées sur les côtés opposés de l'élément de renforcement (18) et **en ce que** l'élément de châssis (7) s'engage, par liaison de forme, dans les contre-dépouilles (22).

7. Structure selon l'une des revendications 1 à 6,
**caractérisée en ce que**
le au moins un élément de renforcement (18) est relié, par l'intermédiaire d'un élément de type boulon (14), au palier de charnière (11) et **en ce que**, de préférence, l'élément de type boulon (14) relie la lame de charnière (10) au palier de charnière (11).

8. Structure selon l'une des revendications 1 à 7,
**caractérisée en ce que**
la porte (8) est une porte de paroi arrière et/ou l'élément de châssis (7) est un élément de châssis de paroi arrière.

9. Procédé de montage d'une porte (8) sur une unité de charnière (9) d'un élément de châssis (7) d'une structure (2) d'un véhicule utilitaire (1), selon l'une des revendications 1 à 8, **caractérisé en ce que** le au moins un élément de renforcement (18) de l'unité de charnière (9) est inséré, par liaison de forme, dans l'élément de châssis (7) et
le palier de charnière (11) de l'unité de charnière (9) est relié à l'élément de châssis (7) et audit au moins un élément de renforcement (18).

10. Procédé selon la revendication 9,
dans lequel d'abord le au moins un élément de renforcement (18) est relié, par liaison de forme, à l'élément de châssis (7) et ensuite le palier de charnière (11) est relié à l'élément de châssis (7) ainsi qu'audit au moins un élément de renforcement (18).

11. Procédé selon la revendication 9 ou 10,
dans lequel l'insertion dudit au moins un élément de renforcement (18) comporte les étapes d'insertion dans l'ouverture (21) de l'élément de châssis (7) et de rotation de l'élément de renforcement (18) dans l'ouverture (21) de l'élément de châssis (7) et dans lequel la rotation de l'élément de renforcement (18) entraîne une liaison de forme entre l'élément de renforcement (18) et l'élément de châssis (7).

12. Procédé selon l'une des revendications 9 à 11,
dans lequel un détachement dudit au moins un élément de renforcement (18) de l'élément de châssis (7) par la rotation de l'élément de renforcement (18) dans l'élément de châssis est empêché par la liaison du palier de charnière (11) avec l'élément de châssis (7).

13. Procédé selon l'une des revendications 9 à 12,
dans lequel le palier de charnière (11) est relié simultanément audit au moins un élément de renforcement (18) et à la lame de charnière (10) de l'au moins une porte (8) de la structure (2), notamment par un élément de type boulon (14) de l'unité de charnière (9).
